# EUROPÄISCHE PATENTSCHRIFT

(11) **EP 2 722 474 B1**
(45) Veröffentlichungstag und Bekanntmachung des Hinweises auf die Patenterteilung: **14.06.2017**
(21) Anmeldenummer: 13187769.8
(22) Anmeldetag: 08.10.2013
(51) Int. Cl.: E06B 5/16, E06B 3/54, B32B 17/06, E04B 2/74

(54) **Halterung für eine Brandschutzverglasung**
Holder for a fire-resistant glazing
Disposition de fixation d'un vitrage résistant au feu

(30) Priorität: 16.10.2012 DE 202012103964 U; 16.10.2012 DE 202012103966 U
(43) Veröffentlichungstag der Anmeldung: 23.04.2014
(73) Patentinhaber: PROMAT GmbH, 40878 Ratingen (DE)
(72) Erfinder: Wiedemann, Günter, 40629 Düsseldorf (DE)
(74) Vertreter: Van Steenlandt, Wim August Maria

(56) Entgegenhaltungen:
- DE-U1- 9 101 452
- DE-U1- 9 207 155
- DE-U1- 9 315 811
- DE-U1-202009 002 800

## Beschreibung

Die Erfindung betrifft eine Halterung für eine Brandschutzscheibe, die zwei parallel zueinander beabstandete und an einer raumbegrenzenden Struktur anbringbare Halteprofile umfasst, zwischen denen die Brandschutzscheibe einsetzbar ist. Ferner betrifft die Erfindung eine Brandschutzverglasung zur Vermeidung des Durchtritts von Feuer und Rauch im Brandfall von einem Raum in einen anderen mit einer Brandschutzscheibe, die in einer solchen Halterung fixiert ist.

Die Erfindung betrifft ferner eine Halterung für eine Brandschutzscheibe, wobei die Halterung zwei parallel zueinander beabstandete und an einer raum-begrenzenden Struktur anbringbare Halteprofile umfasst, zwischen denen die Brandschutzscheibe einsetzbar ist, wobei die Halteprofile als Hohlprofile ausgestaltet sind, an denen jeweils wenigstens zwei Befestigungselemente angebracht und/oder ausgebildet sind. Darüber hinaus betrifft die Erfindung eine Brandschutzverglasung zur Vermeidung des Durchtritts von Feuer und Rauch im Brandfall von einem Raum in einen anderen mit zumindest einer Brandschutzscheibe, die in einer solchen Halterung fixiert ist.

Bei Brandschutzverglasungen handelt es sich um lichtdurchlässige Bauteile, die dazu vorgesehen sind, entsprechend ihrer Feuerwiderstandsdauer nicht nur die Ausbreitung von Feuer und Rauch, sondern zusätzlich auch einen Wärmeübergang von einem Raum in den nächsten zu verhindern. Gemäß DIN 4102, Teil 13 sind Brandschutzverglasungen der Feuerwiderstandsklasse F sowie der Feuerwiderstandsklasse G bekannt und in den jeweils gestellten Anforderungen erläutert.

Bei einer aus dem Stand der Technik bekannten Brandschutzverglasung wird eine Stahlrahmenkonstruktion verwendet, bei der die einzelnen Brandschutzscheiben durch Stahlhohlprofile miteinander verbunden sind, an denen die Brandschutzscheiben stoßseitig anliegen. Zur Sicherstellung, dass im Brandfall keine Beschädigungen der Stahlhohlprofile sowie ein Durchschlagen der Flammen im Bereich der Stoßfläche auftreten, sind die Stahlhohlprofile beidseitig durch Streifen aus nicht brennbarem bzw. schwer entflammbarem Material abgedeckt und geschützt. Bei einer solchen Konstruktion wird es zum Teil als nachteilig empfunden, dass der Erstellungsaufwand vergleichsweise hoch ist. Zudem sind die verwendeten Streifen aus nicht brennbarem bzw. schwer entflammbarem Material optisch wenig ansprechend und im Vergleich zur Gesamtfläche der Brandschutzscheibe relativ breit.

Weiterhin ist es bekannt, Stahlhohlprofile einer Brandschutzverglasung mit einer im Brandfall kühlenden Masse zu füllen. Die Kühlwirkung wird hierbei durch Abgabe von Feuchtigkeit, mithin also in einer Art Verdunstungskühlung, erreicht. Die Befestigung der Brandschutzscheiben erfolgt über Glashalteleisten, welche mit den Stahlhohlprofilen verschraubt sind. Diese Brandschutzverglasung hat den Nachteil, dass nur schwer abschätzbar ist, ob die in die Stahlhohlprofile eingefüllte Kühlmasse auf Dauer, das heißt auf Jahre hinaus, ihre Wirkung beibehält. Außerdem ergibt sich ein hohes Gesamtgewicht der Konstruktion, das die Handhabung und Verarbeitbarkeit erschwert.

Eine weitere Brandschutzverglasung ist aus dem deutschen Gebrauchsmuster 71 48 693 U bekannt. Dabei handelt es sich um eine verglaste Brandschutztür, deren allseitig umlaufender Rahmen aus jeweils zwei Metallprofilen zusammengesetzt ist. Der Rand der Brandschutzscheibe wird durch einen zwischen den beiden Metallprofilen ausgebildeten Kanal festgehalten, wobei zwischen der Stirn- bzw. Stoßfläche der Brandschutzscheibe und der gegenüberliegenden, an dem einen der beiden Metallprofile ausgebildeten Fläche eine schmale Fuge verbleibt. Im Brandfall schäumt infolge der Wärmeentwicklung ein in der Scheibe enthaltener Schutzwirkstoff auf, wobei dieser aus den Stoßflächen in die Fuge austritt und diese abdichtet. Die beiden Metallprofile sind durch Schrauben miteinander verbunden. Um kritische Wärmebrücken im Bereich der Anlageflächen der Metallprofile zu verhindern, befindet sich zwischen deren einander zugewandten Flächen eine Wärmedämmschicht in Form eines Anstrichs oder einer Isolierschicht.

Trotz Verwendung dieser Wärmedämmschicht bleibt die in dem deutschen Gebrauchsmuster 71 48 693 U beschriebene Brandschutzverglasung hinsichtlich ihrer brandschutztechnischen Eigenschaften unbefriedigend. Die Wärmedämmschicht ist relativ dünn ausgebildet, so dass Wärmeübergänge in erheblichem Maße auftreten. Hinzu kommt, dass die Verschraubung zwischen den beiden Metallprofilen eine weitere kritische Wärmebrücke bildet. Die bekannte Brandschutzverglasung weist infolge ihres relativ breit gestalteten Rahmens überdies auch gestalterische Nachteile auf.

Weiter offenbart die DE 93 15 811 U1 offenbart ein Wand- oder Türelement, insbesondere ein feuerwiderstandsfähiges Element, mit einer Glasscheibe, die zumindest an ihrem oberen Rand mit einem Tragelement verbunden ist. Dabei ist zumindest längs des oberen Randes der Glasscheibe entlang wenigstens einer Kante eine die Scheibenfläche überragende und mit dieser fest verbundene Verdeckung vorgesehen und ferner mit dem tragenden Element, beispielsweise mit einer Wand, ein Halteelement verbunden, das den innenliegenden Rand der Verdickung klauenartig untergreift. Auf diese Weise wird die Glasscheibe randseitig mit dem Tragelement formschlüssig verbunden.

Die DE 91 01 452 U1 offenbart des Weiteren eine Brandschutzverglasung mit mindestens einer, insbesondere mehreren einander benachbart angeordneten Brandschutzscheiben, die ein aufschäumendes Mittel als Schutzwirkstoff enthalten. Dabei sind die einzelnen Scheiben vorzugsweise unter Bildung einer schmalen Fuge unmittelbar aneinander oder aufeinander angeordnet und in ihrer Position beidseitig derart gehalten, dass die Fuge im Brandfall durch das aufschäumende Mittel der benachbarten Scheibe feuer- und rauchdicht verschlossen wird. Bei Verbindung der Brandschutzverglasung mit raumbegrenzenden Strukturen ist vorgesehen, dass Schrauben vertikal durch wandseitig angeordnete Profile mittels Dübeln im Mauerwerk einer Wand verankert werden. Dabei befinden sich zwischen den Profilen und den Rändern der Brandschutzscheibe Elastozellbänder sowie Dichtungsmassen.

Aus der DE 92 07 155 U1 ist eine Brandschutzverglasung mit mindestens einer ein aufschäumendes Mittel als Schutzwirkstoff enthaltenden Brandschutzscheibe bekannt, die beiderseits von aus nur begrenzt hitzewiderstandsfähigem Material bestehenden Profilen gehalten wird, wobei die jeweils einander gegenüberliegenden Profile miteinander über mindestens einen Steg aus einem ebenfalls nur begrenzt hitzewiderstandsfähigem Material verbunden sind. Die DE 92 07 155 U1 offenbart eine Halterung für eine Brandschutzscheibe gemäß den Merkmalen des Oberbegriffes des Anspruchs 1.

Eine Brandschutzverglasung der eingangs genannten Art ist aus EP 0 498 021 B1 bekannt. Diese Brandschutzverglasung weist eine Brandschutzscheibe auf, deren Rand an beiden Seiten durch jeweils ein Hohlprofil aus Stahl abgedeckt ist, wobei zwischen der Stoßfläche der Brandschutzscheibe und der gegenüberliegenden Fläche eine Fuge verbleibt. Die beiderseits der Brandschutzscheibe verlaufenden Profile sind ausschließlich über die als Isolierschicht dienende Brandschutzscheibe miteinander verbunden, so dass ein unmittelbarer Wärmeübertrag von einem Stahlhohlprofil auf dasjenige auf der anderen Seite der Brandschutzscheibe weitestgehend vermieden wird. Zwar wird durch eine solche Konstruktion eine gute Isolation der beiden Seiten der Profilrahmenkonstruktion voneinander erreicht, jedoch ist der Aufbau einer derartigen Verglasung aufwändig und anspruchsvoll. Dies liegt unter anderem daran, dass die Profile jeweils einzeln ausgerichtet und befestigt werden müssen und insbesondere in Bezug auf ihre Einbauhöhe und die Flucht auszurichten sind. Kommt es zu Fehlern beim Einbau, so kann hierdurch die Brandschutzresistenz nachteilig beeinflusst sein. Die Erfindung liegt die Aufgabe zugrunde, bei einer Halterung der eingangs genannten Art den Montageaufwand zu reduzieren und das Fehlerpotential beim Einbau zu verringern. Gleichzeitig soll mit Hilfe der Halterung eine gute Isolationswirkung der fertig montierten Brandschutzverglasung insbesondere im Rahmenbereich erzielt werden.

Die Aufgabe ist erfindungsgemäß gelöst durch eine Halterung für eine Brandschutzscheibe mit den Merkmalen des Anspruchs 1. Der Erfindung liegt die durch Versuche untermauerte Erkenntnis zugrunde, dass mit Hilfe einer herausnehmbaren Justierschablone die einzelnen Halteprofile der Halterung bereits auf den erforderlichen Abstand exakt vormontiert und mit der Justierschablone an der gewünschten Einbaustelle angebracht werden können. Nach dem Fixieren der Halterung und vor dem Einbau der Brandschutzscheibe wird die Justierschablone entfernt, wobei die Halteprofile in ihrer montierten Position verbleiben, ohne dass zwischen den Halteprofilen eine Wärmebrücke ausgebildet ist. Bei der herausnehmbaren Justierschablone handelt es sich also im Prinzip um eine Montagehilfe, die auf der Baustelle eine aufwendige parallele Ausrichtung der Halteprofile überflüssig macht und zudem die Gefahr einer unpräzisen Montage erheblich reduziert.

Durch die Verwendung von jeweils zwei Befestigungselementen und zwei Justierschablonen ist eine dauerhafte präzise Ausrichtung der Halteprofile im vormontierten Zustand möglich. Bei besonders langen Halteprofilen von beispielsweise 2 m Länge oder mehr, können durchaus auch weitere Befestigungselemente und Justierschablonen in der vorgenannten Konstellation vorgesehen sein.

Als Halteprofile können im Prinzip jegliche Materialien eingesetzt werden, die für die Konstruktion von Brandschutzverglasungen und Brandschutzelementen herkömmlicher Art zur Anwendung kommen. Dies sind beispielsweise Metallprofile, insbesondere Metall-Hohlprofile, wobei solche aus Stahl, Edelstahl oder Aluminium besonders bevorzugt sind, ohne dass die Erfindung jedoch auf diese Materialien beschränkt ist.

In vorteilhafter Ausgestaltung besitzen die Halteprofile einen rechteckigen Querschnitt. Was die Formgebung der Halteprofile in ihrer Längsausdehnung betrifft, können diese gerade sein oder aber auch bogenförmig, kreissegmentartig, gewinkelt und dergleichen ausgebildet sein, je nachdem, welche Form der Brandschutzverglasung verliehen werden soll. In vorteilhafter Ausgestaltung sind die Halteprofile in Längsrichtung bogenförmig, kreissegmentartig, gewinkelt oder gerade ausgebildet. In den Eckbereichen können die Halteprofile stumpf aufeinanderstoßen oder aber auch auf Gehrung geschnitten werden.

Die Befestigungselemente sind in Längsrichtung an den Halteprofilen zweckmäßigerweise in deren Endbereichen angebracht und dabei seitlich zueinander versetzt, so dass die Befestigungselemente sich weder überlappen noch einen unmittelbaren Kontakt zueinander haben, dabei jedoch gleichzeitig zueinander benachbart sind. So kann der Zwischenraum zwischen den korrespondierenden Befestigungselementen beispielsweise 1 bis 15 cm betragen.

Die Befestigungselemente erstrecken sich bei Draufsicht auf die erfindungsgemäße Halterung jeweils in den durch die beiden parallel zueinander verlaufenden Halteprofile gebildeten Zwischenraum. Zweckmäßigerweise ist die Dimensionierung der Befestigungselemente so gewählt, dass sie jeweils über die Mitte der Entfernung zwischen den Halteprofilen hinausragen. Beispielsweise können die Befestigungselemente so dimensioniert sein, dass die bis auf eine Entfernung von etwa 1 bis 5 mm an das gegenüberliegende Halteprofil heranreichen. Hierdurch wird einerseits die Möglichkeit für eine ausreichende Befestigung geschaffen, ohne dass es jedoch zur Ausbildung einer Wärmebrücke von dem ersten Halteprofil über das diesem zugeordnete Befestigungselement auf das gegenüberliegende Halteprofil kommen kann.

In weiterer vorteilhafter Ausgestaltung der erfindungsgemäßen Halterung sind die Befestigungselemente unterhalb der zu der raumbegrenzenden strukturweisenden Seiten der Halteprofile angeordnet. Dabei können die Halteprofile auf die Befestigungselemente aufgesetzt sein. Ebenfalls im Rahmen dieser Erfindung liegt die Möglichkeit, in den Halteprofilen Aussparungen in mit der Dicke der Befestigungselemente übereinstimmender Dimensionierung vorzusehen, so dass die Befestigungselemente bündig mit der Unterseite der Halteprofile abschließen.

Die Befestigungselemente des ersten Halteprofils sind vorzugsweise mit diesem verschraubt, während die Befestigungselemente des zweiten Halteprofils mit dem zweiten Halteprofil verschweißt oder verschraubt sind. Hierdurch wird die Möglichkeit geschaffen, nach der Fixierung der Befestigungselemente in der gewünschten Endposition das erste Halteprofil durch Lösen der Verschraubungen von den diesem zugeordneten Befestigungselementen zu entfernen, um das Einsetzen einer Brandschutzscheibe zu erleichtern. Nach dem Einsetzen der Brandschutzschreibe kann anschließend das Halteprofil wieder an seiner ursprünglichen Stelle angeschraubt werden. Da die Befestigungselemente während dieser Montageschritte weiterhin fixiert bleiben, ist eine präzise Wiederanbringung des zwischenzeitlich gelösten Halteprofils an seiner ursprünglichen Position sichergestellt.

Hierbei sind die Halteprofile vorzugsweise als Hohlprofile ausgestaltet. Zur Ausbildung der Verschraubung ist zwischen dem Befestigungselement und dem Halteprofil in das Befestigungselement eine Gewindehülse eingeschraubt oder daran angeschweißt, welche das Halteprofil zumindest teilweise durchsetzt. In die Gewindehülse ist ferner von der dem Befestigungselement abgewandten Seite des Halteprofils eine Schraube eingeschraubt, mit der das Halteprofil und das Befestigungselement miteinander verspannt sind. Ist die Gewindehülse in das Befestigungselement eingeschraubt, kann auch diese bei der Montage der Brandschutzscheibe temporär entfernt werden, sollte dies erforderlich sein. Andernfalls verbleibt die Gewindehülse bei der Montage im Befestigungselement, was den Vorteil hat, dass die Gewindehülse während der Montage die Brandschutzscheibe nach dem Einsetzen seitlich abstützt, so dass diese bis zum Anschrauben des temporär entfernten Halteprofils nicht anderweitig fixiert werden muss.

In Weiterbildung der erfindungsgemäßen Halterung sind in der Justierschablone wenigstens zwei Bohrungen und in den Befestigungselementen jeweils wenigstens eine, mit jeweils einer der Bohrungen der Justierschablone konzentrisch angeordnete und mit einem Innengewinde versehende Bohrungen angebracht, wobei die Justierschablone mit den Befestigungselementen jeweils mittels durch die zueinander konzentrischen Bohrungen geführten Verbindungsschrauben verbunden ist. Hierdurch kann die temporäre Verbindung zwischen den Befestigungselementen und der Justierschablone mit einfachen Handgriffen gelöst werden.

Bei der vorgenannten Ausführungsform der erfindungsgemäßen Halterung ist es weiter bevorzugt, dass in der Justierschablone wenigstens zwei weitere Bohrungen und in den Befestigungselementen jeweils wenigstens eine weitere, im Bezug auf die weiteren Bohrungen der Justierschablone konzentrisch angeordnete Bohrungen vorgesehen sind, wobei der Innendurchmesser der in der Justierschablone vorgesehenen weiteren Bohrungen denjenigen der weiteren Bohrungen der Befestigungselemente übersteigt. Dabei ist das Befestigungselement vorzugsweise mittels einer die weiteren Bohrungen des Befestigungselementes und der Justierschablone durchdringenden Befestigungsschraube an der raumbegrenzenden Struktur anbringbar, wobei der Innendurchmesser der in der Justierschraube vorgesehenen weiteren Bohrungen größer ist als der Durchmesser des Schraubenkopfes der Befestigungsschraube. Hierdurch wird erreicht, dass bei der Montage der Halterung an gewünschter Stelle der raumbegrenzenden Struktur, beispielsweise an der Innenseite einer Laibung, die hierfür verwendeten Befestigungsschrauben durch die Justierschablone hindurch geschraubt werden können, wobei lediglich die jeweiligen Befestigungselemente an der raumbegrenzenden Struktur, nicht jedoch die Justierschablone fixiert wird. So kann anschließend die Justierschablone durch Lösen der Verbindungsschrauben zu den jeweiligen Befestigungselementen entfernt werden, wobei die Halteprofile im fixierten Zustand verbleiben.

Die Justierschablone kann im Prinzip jede geeignete Form besitzen, wobei die Justierschablone vorzugsweise streifenförmig ausgebildet und insbesondere durch einen Blechstreifen gebildet ist.

Um die Handhabung und die Entfernbarkeit der Justierschablone zu vereinfachen, kann der Blechstreifen an beiden Enden zur Ausbildung von Griffbereichen zum Herausnehmen der Justierschablone abgekantet sein, vorzugsweise rechtwinklig abgekantet, so dass er leicht aus dem Bereich zwischen den Halteprofilen händisch entnehmbar ist.

Weiterhin ist es bevorzugt, dass die Justierschablone farbig ausgebildet ist. Hierdurch ist die Justierschablone für das Montagepersonal leichter zu identifizieren. In einer Montageanleitung kann zudem einfach auf dieses zentrale Bauteil Bezug genommen werden. Zudem können auch die Verbindungsschrauben zwischen der Justierschablone und den Befestigungselementen farbig gekennzeichnet sein.

Die eingangs genannte Aufgabe ist erfindungsgemäß ferner gelöst durch eine Halterung für eine Brandschutzscheibe, wobei die Halterung zwei parallel zueinander beabstandete und an einer raumbegrenzenden Struktur anbringbare Halteprofile umfasst, zwischen denen die Brandschutzscheibe einsetzbar ist, wobei die Halteprofile als Hohlprofile ausgestaltet sind, an denen jeweils wenigstens zwei Befestigungselemente angebracht und/oder ausgebildet sind, wobei die Halterung dadurch gekennzeichnet ist, dass die Befestigungselemente des ersten Halteprofils und die Befestigungselemente des zweiten Halteprofils paarweise korrespondierend, parallel übereinander beabstandet und wenigstens teilweise oder vollständig überlappend angeordnet sind, wobei zwischen zueinander korrespondierenden Befestigungselementen ein Isolierelement vorgesehen ist.

Ferner ist es bevorzugt, dass in den übereinander angeordneten Befestigungselementen und in dem Isolierelement jeweils wenigstens eine durchgehende Bohrung zur Durchführung einer Befestigungsschraube vorgesehen ist, mittels der die Halterung an der raumbegrenzenden Struktur anbringbar ist. Dies ist besonders vorteilhaft, weil durch diese Bohrung die relative Lage der Befestigungselemente zueinander und damit auch der Halteprofile zueinander definiert ist. Mit anderen Worten werden die Halteprofile in der vorgesehenen Weise zueinander ausgerichtet, in dem eine Befestigungsschraube durch die Bohrung eingedreht wird. Bei dieser Ausführungsform kann bis zum Zeitpunkt der Montage der Halterung an der raumbegrenzenden Struktur eine Verbindungsschraube als Transportsicherung durch die Bohrung geführt sein, die mittels einer auf der gegenüberliegenden Seite auf die Verbindungsschraube aufgeschraubten Mutter die korrespondierenden Befestigungselemente und das Isolierelement miteinander verspannt. Dadurch werden die Einzelteile der Halterung für den Transport zusammen gehalten. Die Befestigungselemente sind durch weitestgehend rechtwinklig an den Halteprofilen übereinander angeordnete und thermisch voneinander getrennte Metallbleche bzw. Metalllaschen gebildet, die sich in Richtung des jeweils gegenüberliegenden Halteprofils erstrecken. Mit anderen Worten erstrecken sich die Befestigungselemente bei Draufsicht auf die erfindungsgemäße Halterung jeweils in den durch die beiden parallel zueinander verlaufenden Halteprofile gebildeten Zwischenraum. Zweckmäßigerweise ist die Dimensionierung der Befestigungselemente so gewählt, dass sie jeweils über die Mitte der Entfernung zwischen den Halteprofilen hinausragen. Beispielsweise können die Befestigungselemente so dimensioniert sein, dass die bis auf eine Entfernung von etwa 1 bis 10 mm an das gegenüberliegende Halteprofil heranreichen. Hierdurch wird einerseits die Möglichkeit für eine ausreichende Befestigung geschaffen, ohne dass es jedoch zur Ausbildung einer Wärmebrücke von dem ersten Halteprofil über das diesem zugeordnete Befestigungselement auf das gegenüberliegende Halteprofil kommen kann.

In weiterer vorteilhafter Ausgestaltung der erfindungsgemäßen Halterung sind die Befestigungselemente des ersten Halteprofils unterhalb der zu der raumbegrenzenden Struktur weisenden Seite des ersten Halteprofils angeordnet und die Befestigungselemente des zweiten Halteprofils von der zu der raumbegrenzenden Struktur weisenden Seite des ersten Halteprofils darüberliegend beabstandet angeordnet, wobei zwischen den Befestigungselementen das Isolierelement angeordnet ist. Ebenfalls im Rahmen dieser Erfindung liegt die Möglichkeit, in dem ersten Halteprofil Aussparungen in mit der Dicke der Befestigungselemente übereinstimmender Dimensionierung vorzusehen, so dass die Befestigungselemente bündig mit der Unterseite des ersten Halteprofils abschließen.

Eine weitere vorteilhafte Ausgestaltung der Erfindung sieht vor, dass die Befestigungselemente des ersten Halteprofils mit diesem verschraubt sind und die Befestigungselemente des zweiten Halteprofils mit diesem verschweißt oder verschraubt sind, wobei zur Ausbildung der Verschraubung zwischen dem Befestigungselement und dem Halteprofil in das Befestigungselement eine Gewindehülse eingeschraubt oder daran angeschweißt ist, welche das Halteprofil zumindest teilweise durchsetzt und in die von der dem Befestigungselement abgewandten Seite des Halteprofils eine Verbindungsschraube eingeschraubt ist, mit der das Halteprofil und das Befestigungselement miteinander verspannt sind.

Der Erfindung liegt die durch Versuche untermauerte Erkenntnis zugrunde, dass die erfindungsgemäße Halterung zunächst ohne Brandschutzscheibe an der gewünschten Position mit Hilfe der Befestigungselemente vormontiert werden kann. Dabei können die Halteprofile über im Weiteren beschriebene konstruktive Maßnahmen auf dem erforderlichen Abstand gehalten werden. Anschließend kann eines der Halteprofile zum Einbau der Brandschutzscheibe temporär entfernt werden, indem die Verbindungsschrauben zu den diesem Profil zugeordneten Befestigungselementen gelöst werden. Nach dem Einsetzen der Brandschutzscheibe wird das zwischenzeitlich entfernte Profil wieder auf Gewindehülsen aufgesteckt und wieder durch Eindrehen der Verbindungsschrauben mit den Befestigungselementen verspannt. Da die Befestigungselemente während des Einsetzens der Scheibe nicht gelöst werden ist das zwischenzeitlich entfernte Halteprofil problemlos positionsgetreu anschraubbar. Hierdurch wird auf der Baustelle eine aufwendige parallele Ausrichtung der Halteprofile nach dem Einsetzen der Brandschutzscheibe überflüssig und zudem die Gefahr einer unpräzisen Montage erheblich reduziert. Damit das erste Halteprofil auf die Gewindehülse geschoben werden kann, ist in dem Profil eine Bohrung vorgesehen, deren Innendurchmesser größer als der Außendurchmesser der Gewindehülse ist.

Ist die Gewindehülse in das Befestigungselement eingeschraubt, kann auch diese bei der Montage der Brandschutzscheibe temporär entfernt werden, sollte dies erforderlich sein. Andernfalls verbleibt die Gewindehülse bei der Montage im Befestigungselement, was den Vorteil hat, dass die Gewindehülse während der Montage die Brandschutzscheibe nach dem Einsetzen seitlich abstützt, so dass diese bis zum Anschrauben des temporär entfernten Halteprofils nicht anderweitig fixiert werden muss.

Erfindungsgemäß sind an den Halteprofilen jeweils wenigstens zwei Befestigungselemente angebracht und/oder ausgebildet. Durch die Verwendung von jeweils zwei Befestigungselementen ist eine dauerhafte präzise Ausrichtung der Halteprofile im vormontierten Zustand möglich. Bei besonders langen Halteprofilen von beispielsweise 2 m Länge oder mehr, können durchaus auch weitere Befestigungselemente in der vorgenannten Konstellation vorgesehen sein.

Die Befestigungselemente sind in Längsrichtung an den Halteprofilen zweckmäßigerweise in deren Endbereichen angebracht.

Nach einer weiteren bevorzugten Ausgestaltung der erfindungsgemäßen Halterung sind die Befestigungselemente des ersten Halteprofils und die Befestigungselemente des zweiten Halteprofils paarweise korrespondierend, parallel zueinander beabstandet und wenigstens teilweise oder vollständig überlappend angeordnet, wobei zwischen zueinander korrespondierenden Befestigungselementen - wie auch bei den vorbeschriebenen Ausführungsformen - ein Isolierelement vorgesehen ist. Durch diese relative Positionierung der korrespondierenden Befestigungselemente kann eine Fixierung dieser Befestigungselemente an einer raumbegrenzenden Struktur wie der Innenseite einer Laibung mit nur einer Schraube vollzogen werden. Gleichzeitig wird durch das zwischen den Befestigungselementen sandwichartig angeordnete Isolierelement die Ausbildung einer Wärmebrücke vermieden. Das Isolierelement kann dabei aus dem Fachmann für diese Zwecke an sich bekannten Materialien gebildet sein, wie beispielsweise aus einem Stück einer Brandschutzplatte. Die Dicke des Isolierelements kann den Anforderungen entsprechend angepasst werden und beträgt beispielsweise 1 bis 30 mm, insbesondere 5 bis 20 mm.

Als Halteprofile können im Prinzip jegliche Materialien eingesetzt werden, die für die Konstruktion von Brandschutzverglasungen und Brandschutzelementen herkömmlicher Art zur Anwendung kommen. Dies sind beispielsweise Metallprofile, insbesondere Metall-Hohlprofile, wobei solche aus Stahl, Edelstahl oder Aluminium besonders bevorzugt sind, ohne dass die Erfindung jedoch auf diese Materialien beschränkt ist.

In vorteilhafter Ausgestaltung besitzen die Halteprofile einen rechteckigen Querschnitt. Was die Formgebung der Halteprofile in ihrer Längsausdehnung betrifft, können diese gerade sein oder aber auch bogenförmig, kreissegmentartig, gewinkelt und dergleichen ausgebildet sein, je nachdem, welche Form der Brandschutzverglasung verliehen werden soll. In vorteilhafter Ausgestaltung sind die Halteprofile in Längsrichtung bogenförmig, kreissegmentartig, gewinkelt oder gerade ausgebildet. In den Eckbereichen können die Halteprofile stumpf aufeinanderstoßen oder aber auch auf Gehrung geschnitten werden.

Ein weiterer Gegenstand der vorliegenden Erfindung betrifft eine Brandschutzverglasung zur Vermeidung des Durchtritts von Feuer und Rauch im Brandfall von einem Raum in einen anderen mit zumindest einer Brandschutzscheibe, die in einer erfindungsgemäßen Halterung fixiert ist, insbesondere nach Entfernung der Justierschablone bei der diese verwendenden erfindungsgemäßen Halterung.

Erfindungsgemäß können im Prinzip sämtliche Arten von Brandschutzscheiben eingesetzt werden, wobei solche mit intumeszierenden Eigenschaften bevorzugt sind. hierfür eignen sich Brandschutzscheiben mit mehrlagigem Aufbau und zwischen den einzelnen Glaslagen angeordneten Schichten aus intumeszierendem Material, häufig einer Mischung aus Wasserglas und Glyzerin.

Ebenso können auch Brandschutzscheiben eingesetzt werden, die zwei mittels eines Randverbunds parallel voneinander beabstandete feuerfeste Glasscheiben aufweisen, wobei der vom Randverbund eingeschlossene Raum zwischen den feuerfesten Glasscheiben mit einem Brandschutzgel gefüllt sein kann.

Gelgefüllte Brandschutzscheiben sind im Prinzip bekannt. Für solche Brandschutzscheiben kommen sämtliche Arten von Glasscheiben in Frage. Vorzugsweise besteht jedoch zumindest eine der Glasscheiben aus Sicherheitsglas, insbesondere aus Einscheibensicherheitsglas oder Verbundsicherheitsglas. Dies ist besonders vorteilhaft, da dieses bei extrem hohen Temperaturen im Brandfall in sehr viele kleine Bruchstücke zerspringt, von denen zum einen eine geringere Verletzungsgefahr ausgeht und die zum anderen auch im zerborstenen Zustand gut am Brandschutzgel haften und damit weiterhin das Brandschutzgel für eine gewisse Zeit vor dem direkten Flammenkontakt schützen. Erfindungsgemäß lassen sich jedoch ebenso andere Glasscheiben verwenden, wie Floatglas.

Die Glasscheiben können unabhängig voneinander eine Scheibendicke von 3 bis 20 mm aufweisen, bevorzugt 5 bis 10 mm. Der Abstand der Glasscheiben kann vorzugsweise im Bereich von 5 bis 50 mm liegen. Besonders bevorzugt beträgt der Abstand der Glasscheiben voneinander etwa 8 bis 25 mm oder etwa 8 bis etwa 38 mm, da sich auf diese Weise insbesondere bei mit Brandschutzgel gefüllten Brandschutzverglasungen gute Brandresistenzen bei gleichzeitig moderatem Gewicht der Verglasung erzielen lassen.

Der Raum zwischen den Glasscheiben ist bei gelgefüllten Brandschutzscheiben mit einem besonderen Brandschutzgel gefüllt. Mit Brandschutzgel bzw. Hydrogel gefüllte Brandschutzscheiben sind beispielsweise in der EP 1 820 931 A1 und in der DE 10 2005 018 842 A1 beschrieben.

Mit einem Brandschutzgel gefüllte Brandschutzscheiben bestehen bevorzugt aus zwei parallel beabstandeten Glasscheiben aus Einscheibensicherheitsglas (ESG), die über ein in ihren Randbereichen zwischen den Glasscheiben liegendes umlaufendes Abstandshalteprofil und zum Beispiel einen Polyurethan-Randverbund fixiert und miteinander verbunden sind. Durch eine Öffnung in diesem Abstandshalteprofil werden das Brandschutzgel oder die Vorkomponenten eingefüllt, wobei im letzten Fall die Gelbildung durch Polymerisation zum Hydrogel im mit der Mischung ausgefüllten Hohlraum zwischen den Glasscheiben erfolgt. Die im Rahmen der Erfindung eingesetzten Brandschutzgele können auch Additive beinhalten wie Silikate, UV-Schutzmittel oder auch Farbstoffe.

Weiterhin können zwischen den Halteprofilen und der Brandschutzscheibe Dichtungen vorgesehen sein, die insbesondere aufgeklebt oder aufgespritzt sind. Hierfür kommen typischerweise bei Brandschutzverglasungen verwendete Dichtungs- bzw. Isolationsmaterialien in Betracht, insbesondere solche aus Silikon oder Fluorosilikonelastomeren. Zudem können zwischen den Halteprofilen und der Brandschutzscheibe Dichtstreifen aus intumeszierendem Material eingesetzt sein.

In weiterer Ausgestaltung der erfindungsgemäßen Brandschutzverglasung können die Profile an ihren Außenflächen mit Zierleisten versehen sein, insbesondere mit Zierleisten aus Holz oder Kunststoff. Auf diese Weise kann das optische Erscheinungsbild der Brandschutzverglasung in gewünschter Weise angepasst werden.

Die Erfindung wird im Folgenden anhand eines in den Figuren der Zeichnung dargestellten Ausführungsbeispiels näher erläutert. Dabei zeigt:
- Fig. 1: eine Schnittansicht einer erfindungsgemäßen Brandschutzverglasung mit einer Halterung der vorliegenden Erfindung;
- Fig. 2 bis Fig. 8: einzelne Montageschritte bei der Fixierung der erfindungsgemäßen Halterung gemäß Fig. 1;
- Fig. 9: eine Schnittansicht einer erfindungsgemäßen Brandschutzverglasung mit einer Halterung der vorliegenden Erfindung; und
- Fig. 10: eine Explosionszeichnung der erfindungsgemäßen Halterung gemäß Fig. 9.

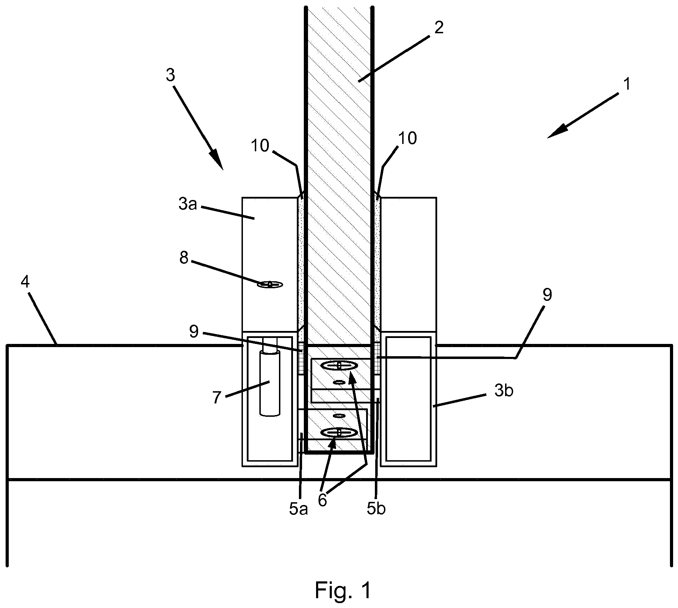

In Fig. 1 ist eine erfindungsgemäße Brandschutzverglasung 1 dargestellt, bei der eine Brandschutzscheibe 2 mittels einer Halterung 3 an einer raumbegrenzenden Struktur 4 befestigt ist. Die Halterung 3 umfasst zwei parallel zueinander beabstandete Halteprofile 3a, 3b aus Vierkant-Stahlrohr mit rechteckigem Querschnitt, zwischen denen die Brandschutzscheibe 2 im Klemmsitz gehalten ist. Die Halteprofile 3a, 3b sind jeweils über mehrere Befestigungselemente 5a, 5b mit Hilfe von Befestigungsschrauben 6 an der raumbegrenzenden Struktur 4 angeschraubt, wobei vorliegend aus Vereinfachungsgründen jeweils nur jeweils ein Befestigungselement 5a, 5b pro Halteprofil 3a, 3b dargestellt ist. Die Befestigungselemente 5a, 5b sind jeweils durch Metallbleche gebildet und im zur raumbegrenzenden Struktur 4 weisenden Bereich unterhalb der Halteprofile 3a, 3b rechtwinklig an diesen befestigt und erstrecken sich in Richtung des jeweils gegenüberliegenden Halteprofils 3a, 3b bis auf etwa 1 mm an das jeweils gegenüberliegende Halteprofil 3a, 3b. Dabei ist das Befestigungselement 5a des ersten Halteprofils 3a mit diesem verschraubt, wohingegen das Befestigungselement 5b des zweiten Halteprofils 3b mit letzterem verschweißt ist.

Zur Ausbildung der Verschraubung zwischen dem Befestigungselement 5a und dem Halteprofil 3a ist in das Befestigungselement 5a eine Gewindehülse 7 eingeschraubt, welche in das Innere des Halteprofils 3a hineinreicht, dieses also teilweise durchsetzt. In die Gewindehülse 7 ist von der dem Befestigungselement 5a abgewandten Seite des Halteprofils 3a eine Schraube 8 eingeschraubt, mit der das Halteprofil 3a und das Befestigungselement 5a miteinander verspannt sind. Zur Einführung der Gewindehülse 7 in das Halteprofil 3a ist in dem Halteprofil 3a eine Bohrung vorgesehen, deren Innendurchmesser größer als der Außendurchmesser der Gewindehülse 7 ist.

Zur Abdichtung der Brandschutzverglasung 1 sind zwischen den Halteprofilen 3a, 3b und der Brandschutzscheibe 2 jeweils Dichtstreifen 9 aus Elastozellband eingesetzt, wobei zusätzlich die zwischen den Halteprofilen 3a, 3b und der Brandschutzscheibe 2 gebildete Zwischenraum im oberen Bereich mit einer Silikonmasse 10 versiegelt sind.

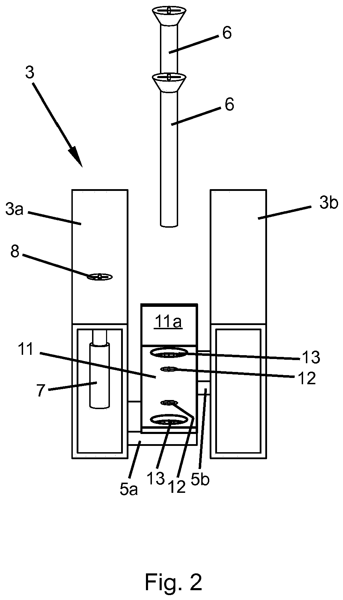

Die Erstellung der in Fig. 1 dargestellten erfindungsgemäßen Brandschutzverglasung wird im Folgenden anhand der Fig. 2 bis 8 verdeutlicht. In Fig. 2 ist die Halterung 3 vor der Montage abgebildet. Dabei sind die Halteprofile 3a, 3b über eine nach der Befestigung der Halteprofile 3a, 3b herausnehmbare Justierschablone 11 lösbar miteinander verbunden. Die Justierschablone 11 besteht aus einem Blechstreifen, welcher jeweils in seinen Endbereichen rechtwinklig abgekantet ist, so dass dort Griffbereiche 11a ausgebildet sind. Aufgrund der Schnittdarstellung ist die vordere Abkantung nicht dargestellt.

Zur Fixierung der Justierschablone 11 an den Befestigungselementen 5a, 5b sind in der Justierschablone 11 sowie in den Befestigungselementen 5a, 5b jeweils konzentrisch angeordnete Bohrungen vorgesehen, wobei in den Bohrungen der Befestigungselemente 5a, 5b Innengewinde vorgesehen sind, so dass die Justierschablone 11 mittels Verbindungsschrauben 12 mit den Befestigungselementen 5a, 5b verschraubt werden kann.

Wie bereits vorstehend bei der Beschreibung zu Fig. 1 ausgeführt wurde, können die Halteprofile 3a, 3b mittels der Befestigungsschrauben 6 über die Befestigungselemente 5a, 5b mit dem Untergrund verschraubt werden. Die Justierschablone 11 sorgt einerseits während der Befestigung der Halterung 3 für einen gleichmäßigen Abstand der Halteprofile 3a, 3b voneinander. Damit die Justierschablone 11 nach dem Anschrauben der Halterung 3 an den Untergrund wieder entfernt werden kann, sind in der Justierschablone 11 Bohrungen 13 für die Durchführung der Befestigungsschrauben 6 vorgesehen, wobei der Innendurchmesser der Bohrungen 13 größer ist als der Außendurchmesser des Schraubenkopfes der Befestigungsschrauben 6. Dadurch werden beim Montagevorgang durch das Hereindrehen der Befestigungsschrauben 6 in die raumbegrenzende Struktur 4 lediglich die Befestigungselemente 5a, 5b mit dem Untergrund verspannt, nicht jedoch die Justierschablone 11.

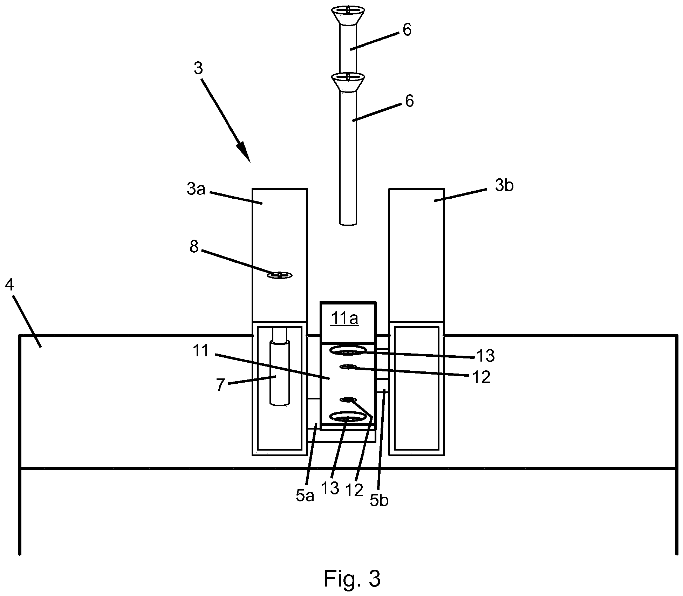

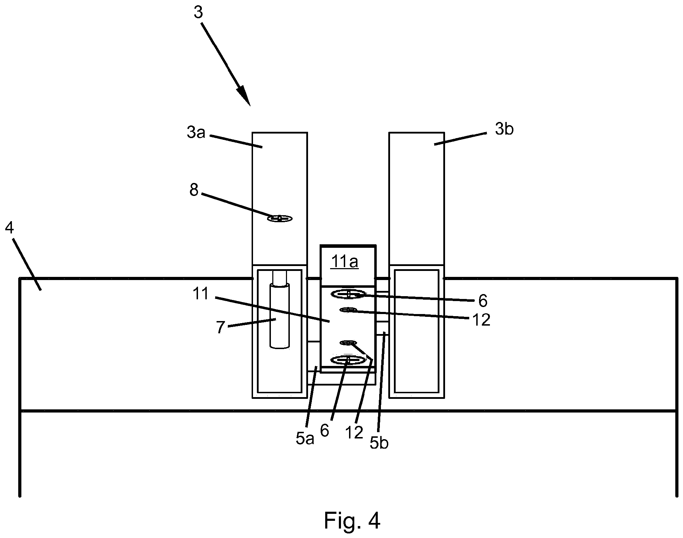

In Fig. 3 ist die in Fig. 2 dargestellte Halterung 3 bereits an entsprechender Position auf die Oberfläche der raumbegrenzenden Struktur 4 aufgesetzt. Anschließend werden die Befestigungsschrauben 6 durch die in die Justierschablone 11 vorgesehenen Bohrungen 13 in die raumbegrenzende Struktur 4 hineingeschraubt, wodurch die Halterung 3 an gewünschter Position fixiert wird. Dies ist in Fig. 4 dargestellt.

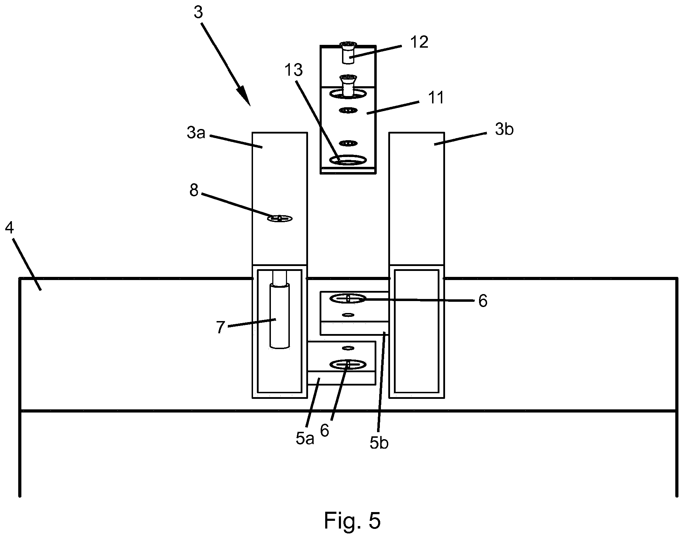

In Fig. 5 ist der Schritt des Entfernens der Justierschablone 11 von der Halterung 3 dargestellt. Hierzu werden die Verbindungsschrauben 12 aus den Befestigungselementen 5a, 5b herausgedreht, so dass die Justierschablone 11 entnommen werden kann. Dabei verbleiben die Halteprofile 3a, 3b auf dem vor der Montage durch die Justierschablone 11 vorgegebenen Abstand.

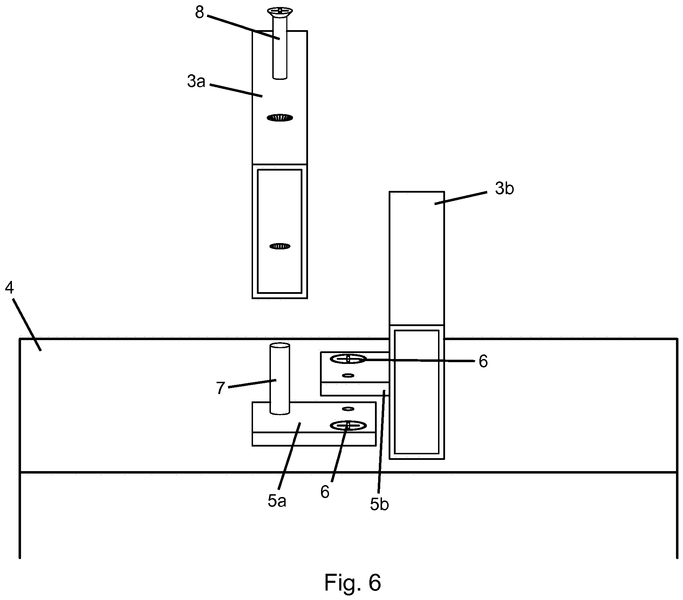

Der darauffolgende Montageschritt ist in Fig. 6 dargestellt. Darin wird die in die Gewindehülse 7 eingedrehte Schraube 8 gelöst, so dass das Halteprofil 3a abgenommen werden kann. Dabei verbleibt das Befestigungselement 5a fest verschraubt auf dem Untergrund.

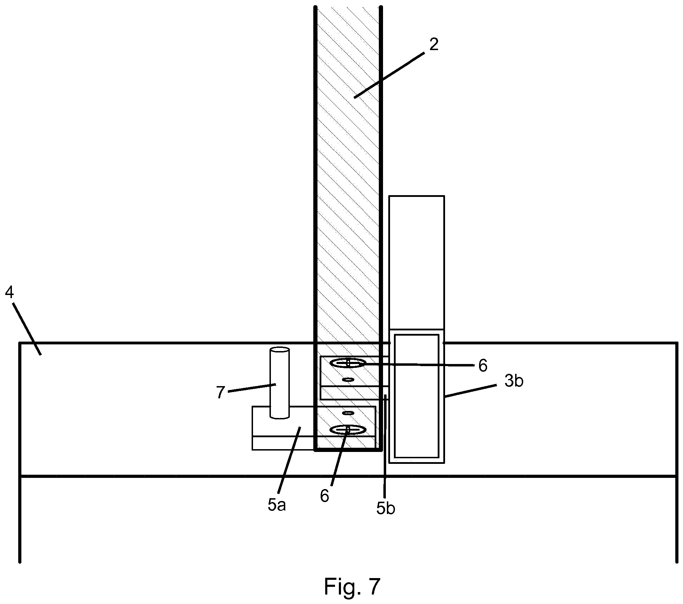

In dem nächsten, in Fig. 7 dargestellten Montageschritt, wird die Brandschutzscheibe 2 eingesetzt. Das Einsetzen der Brandschutzscheibe 2 wird hierbei dadurch erleichtert, dass zuvor das Halteprofil 3a entfernt wurde. Dabei sorgt die in dem Halteprofil 3a verbliebene Gewindehülse 7 für eine temporäre seitliche Fixierung der eingesetzten Brandschutzscheibe 2, so dass diese nicht anderweitig gehalten werden muss. Die Gewindehülse 7 kann je nach Art des vorgesehenen Einsetzens der Brandschutzscheibe 2 auf dem Befestigungselement 5a aufgeschweißt oder lösbar aufgeschraubt sein, um den Glaseinbau zu vereinfachen.

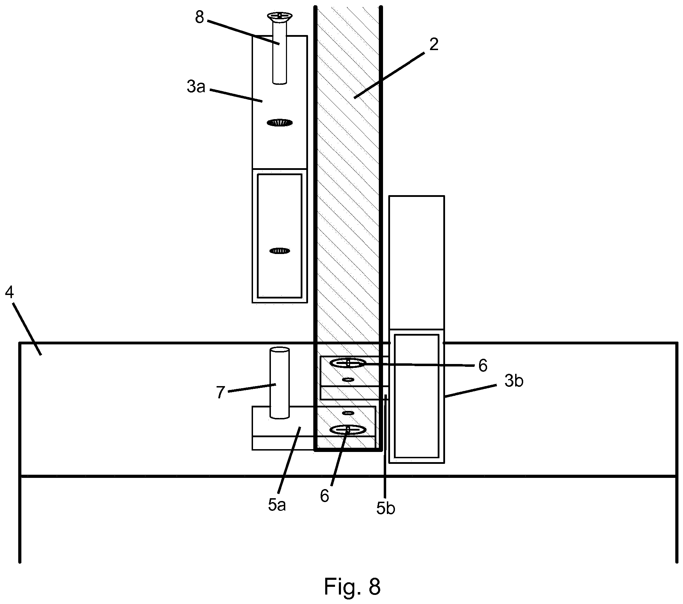

Im folgenden Schritt, der in Fig. 8 dargestellt ist, wird nun das zuvor entfernte Halteprofil 3a wieder an seiner vorherigen Position fixiert. Hierzu wird das Halteprofil 3a auf die Gewindehülse 7 gesteckt und danach mittels der Schraube 8 mit dem Befestigungselement 5a verschraubt. Anschließend wird in den Zwischenraum zwischen der Brandschutzscheibe 2 und dem Halteprofil 3a noch der Dichtstreifen 9 eingesetzt. Bei dem Halteprofil 3b ist in den Zwischenraum zwischen der Brandschutzscheibe 2 und dem Halteprofil 3b vorher bereits der Dichtstreifen 9 eingesetzt. Die verbleibenden Fugen werden danach mittels der Silikonmasse 10 verfüllt, wodurch die in Fig. 1 dargestellte Brandschutzverglasung fertig montiert ist.

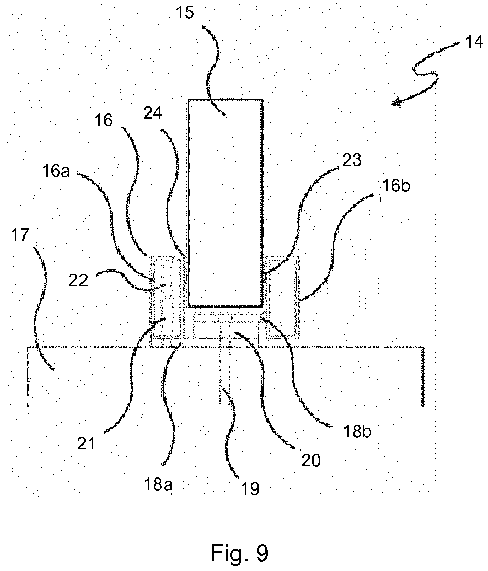

In Fig. 9 ist eine erfindungsgemäße Brandschutzverglasung 14 dargestellt, bei der eine Brandschutzscheibe 15 mittels einer Halterung 16 an einer raumbegrenzenden Struktur 17 befestigt ist. Die Halterung 16 umfasst zwei parallel zueinander beabstandete Halteprofile 16a, 16b aus Vierkant-Stahlrohr mit rechteckigem Querschnitt, zwischen denen die Brandschutzscheibe 15 im Klemmsitz gehalten ist. Die Halteprofile 16a, 16b sind jeweils über mehrere Befestigungselemente 18a, 18b mit Hilfe von Befestigungsschrauben 19 an der raumbegrenzenden Struktur 17 angeschraubt, wobei vorliegend aus Vereinfachungsgründen jeweils nur jeweils ein Befestigungselement 18a, 18b pro Halteprofil 16a, 16b dargestellt ist.

Die Befestigungselemente 18a, 18b sind jeweils durch Metallbleche gebildet und im zur raumbegrenzenden Struktur 17 weisenden Bereich unterhalb der Halteprofile 16a, 16b rechtwinklig an diesen befestigt und erstrecken sich in Richtung des jeweils gegenüberliegenden Halteprofils 16a, 16b bis auf etwa 1 mm an das jeweils gegenüberliegende Halteprofil 16a, 16b. Dabei ist das Befestigungselement 18a des ersten Halteprofils 16a mit diesem verschraubt, wohingegen das Befestigungselement 18b des zweiten Halteprofils 16b mit letzterem verschweißt ist. Zwischen den Befestigungselementen 18a, 18b ist ein Isolierelement 20 aus einer Brandschutzplatte angeordnet.

Zur Ausbildung der Verschraubung zwischen dem Befestigungselement 18a und dem Halteprofil 16a ist in das Befestigungselement 18a eine Gewindehülse 21 eingeschraubt, welche in das Innere des Halteprofils 16a hineinreicht, dieses also teilweise durchsetzt. In die Gewindehülse 21 ist von der dem Befestigungselement 18a abgewandten Seite des Halteprofils 16a eine Schraube 22 eingeschraubt, mit der das Halteprofil 16a und das Befestigungselement 18a miteinander verspannt sind. Zur Einführung der Gewindehülse 21 in das Halteprofil 16a ist in dem Halteprofil 16a eine Bohrung vorgesehen, deren Innendurchmesser größer als der Außendurchmesser der Gewindehülse 21 ist.

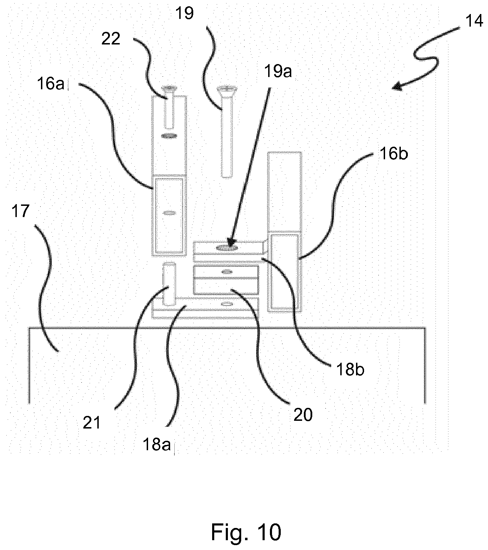

Zur Abdichtung der Brandschutzverglasung 14 sind zwischen den Halteprofilen 16a, 16b und der Brandschutzscheibe 15 jeweils Dichtstreifen 23 eingesetzt, wobei zusätzlich die zwischen den Halteprofilen 16a, 16b und der Brandschutzscheibe 15 gebildete Zwischenraum im oberen Bereich mit einer Silikonmasse 24 versiegelt sind. Die Halterung 16 der in Fig. 9 gezeigten Brandschutzverglasung 14 ist in Fig. 10 nochmals als Explosionsdarstellung abgebildet. Dabei ist zu erkennen, dass in den Befestigungselementen 18a, 18b und dem Isolierelement 20 eine durchgehende Bohrung 19a vorgesehen ist, die zur Durchführung der Befestigungsschraube 6 bei der Montage dient. Zum Transport der Halterung 16 kann hier temporär als Transportsicherung eine Gewindeschraube mit einer Mutter eingesetzt sein, mit denen die Halteprofile 16a, 16b aneinander befestigt sind.

Bei der Erstellung der in Fig. 9 dargestellten erfindungsgemäßen Brandschutzverglasung 14 wird so vorgegangen, dass zunächst die zum Transport eingesetzte Schraube entfernt und die Halterung 16 an einer gewünschten Position in der raumbegrenzenden Struktur 17 verschraubt. Durch Einsetzen der Befestigungsschraube 19 in die Bohrung 19a wird die relative Lage der Befestigungselemente 18a, 18b zueinander und damit auch der Halteprofile 16a, 16b zueinander definiert. Mit anderen Worten werden die Halteprofile 16a, 16b in der vorgesehenen Weise parallel zueinander ausgerichtet, in dem eine Befestigungsschraube durch die Bohrung eingedreht wird. Eine aufwändige händische Justage ist also nicht mehr erforderlich.

Im darauffolgenden Montageschritt wird die in die Gewindehülse 21 eingedrehte Verbindungsschraube 22 gelöst, so dass das erste Halteprofil 16a abgenommen werden kann. Dabei verbleibt das Befestigungselement 18a mittels der Befestigungsschraube 19 fest auf dem Untergrund verschraubt. Im nächsten Montageschritt wird die Brandschutzscheibe 15 eingesetzt. Das Einsetzen der Brandschutzscheibe 15 wird hierbei dadurch erleichtert, dass zuvor das Halteprofil 16a entfernt wurde. Dabei sorgt die in dem Befestigungselement 16a verbliebene Gewindehülse 21 für eine temporäre seitliche Fixierung der eingesetzten Brandschutzscheibe 15, so dass diese nicht anderweitig gehalten werden muss. Im Weiteren wird das zuvor entfernte Halteprofil 16a wieder an seiner vorherigen Position fixiert. Hierzu wird das Halteprofil 16a auf die Gewindehülse 21 gesteckt und danach mittels der Schraube 22 mit dem Befestigungselement 18a verschraubt. Anschließend werden in den Zwischenraum zwischen der Brandschutzscheibe 15 und den Halteprofilen 16a, 16b noch die Dichtstreifen 23 eingesetzt und die verbleibende Fuge mittels der Silikonmasse 24 verfüllt, wodurch die in Fig. 9 dargestellte Brandschutzverglasung fertig montiert ist.

Die in den Figuren der Zeichnung dargestellten Ausführungsbeispiele der Erfindung als auch die im Zusammenhang mit diesen erläuterten Ausführungsbeispiele der Erfindung dienen lediglich der Erläuterung der Erfindung und sind für diese nicht beschränkend.

### Bezugszeichenliste

- 1: Brandschutzverglasung
- 2: Brandschutzscheibe
- 3: Halterung
- 3a: Halteprofil
- 3b: Halteprofil
- 4: Raumbegrenzende Struktur
- 5a: Befestigungselement
- 5b: Befestigungselement
- 6: Befestigungsschraube
- 7: Gewindehülse
- 8: Schraube
- 9: Dichtstreifen
- 10: Silikonmasse
- 11: Justierschablone
- 11a: Griffbereich
- 12: Verbindungsschraube
- 13: Bohrung
- 14: Brandschutzverglasung
- 15: Brandschutzscheibe
- 16: Halterung
- 16a: Halteprofil (Halterung (16))
- 16b: Halteprofil (Halterung (16))
- 17: Raumbegrenzende Struktur
- 18a: Befestigungselement
- 18b: Befestigungselement
- 19: Schraube/Befestigungsschraube
- 19a: Bohrung
- 20: Isolierelement
- 21: Gewindehülse
- 22: Schraube/Verbindungsschraube
- 23: Dichtstreifen
- 24: Silikonmasse

## Patentansprüche

1. Halterung (3) für eine Brandschutzscheibe (2), die zwei parallel zueinander beabstandete und an einer raumbegrenzenden Struktur (4) anbringbare Halteprofile (3a, 3b) umfasst, zwischen denen die Brandschutzscheibe (2) einsetzbar ist, **dadurch gekennzeichnet dass**, an den Halteprofilen (3a, 3b) jeweils wenigstens zwei Befestigungselemente (5a, 5b) thermisch voneinander getrennt angebracht und/oder ausgebildet sind, so dass eine Temperaturübertragung von dem einen Halteprofil auf das andere Halteprofil vermieden ist, wobei die Halteprofile (3a, 3b) vorzugsweise über paarweise miteinander korrespondierende Befestigungselemente (5a, 5b) zur Montage mittels einer entfernbaren Justierschablone (11) verbunden sind, wobei die Befestigungselemente (5a, 5b) durch Metallbleche gebildet und im zur raumbegrenzenden Struktur (4) weisenden Bereich der Halteprofile (3a, 3b) weitestgehend rechtwinklig an diesen angeordnet sind und sich in Richtung des jeweils gegenüberliegenden Halteprofils (3a, 3b) erstrecken, die Befestigungselemente (5a, 5b) sich ferner jeweils in den durch die beiden parallel zueinander verlaufenden Halteprofile (3a, 3b) gebildeten Zwischenraum erstrecken, wobei die Dimensionierung der Befestigungselemente (5a, 5b) so gewählt ist, dass sie jeweils über die Mitte der Entfernung zwischen den Halteprofilen (3a, 3b) hinausragen, und die Befestigungselemente (5a, 5b) unterhalb der zu der raumbegrenzenden Struktur (4) weisenden Seiten der Halteprofile (3a, 3b) an diesen befestigt sind, wobei die Befestigungselemente (5a) des ersten Halteprofils (3a) mit diesem verschraubt sind und die Befestigungselemente (5b) des zweiten Halteprofils (3b) mit diesem verschweißt oder verschraubt sind.

2. Halterung nach Anspruch 1, **dadurch gekennzeichnet, dass** die Halteprofile (3a, 3b) als Hohlprofile ausgestaltet sind und dass zur Ausbildung der Verschraubung zwischen dem Befestigungselement (5a, 5b) und dem Halteprofil (3a, 3b) in das Befestigungselement (5a, 5b) eine Gewindehülse (7) eingeschraubt oder daran angeschweißt ist, welche das Halteprofil (3a, 3b) zumindest teilweise durchsetzt und in die von der dem Befestigungselement (5a, 5b) abgewandten Seite des Halteprofils eine Schraube (8) eingeschraubt ist, mit der das Halteprofil (3a, 3b) und das Befestigungselement (5a, 5b) miteinander verspannt sind.

3. Halterung nach einem der Ansprüche 1 bis 2, **dadurch gekennzeichnet, dass** in der Justierschablone (11) wenigstens zwei Bohrungen und in den Befestigungselementen (5a, 5b) jeweils wenigstens eine, mit jeweils einer der Bohrungen der Justierschablone (11) konzentrisch angeordnete und mit einem Innengewinde versehene Bohrung angebracht sind, wobei die Justierschablone (11) mit den Befestigungselementen (5a, 5b) jeweils mittels durch die zueinander konzentrischen Bohrungen geführten Verbindungsschrauben (12) verbunden ist.

4. Halterung nach Anspruch 3, **dadurch gekennzeichnet, dass** in der Justierschablone (11) wenigstens zwei weitere Bohrungen (13) und in den Befestigungselementen (5a, 5b) jeweils wenigstens eine weitere, in Bezug auf die weiteren Bohrungen (13) der Justierschablone (11) konzentrisch angeordnete Bohrungen vorgesehen sind, wobei der Innendurchmesser der in der Justierschablone (11) vorgesehenen weiteren Bohrungen (13) denjenigen der weiteren Bohrungen der Befestigungselemente (5a, 5b) übersteigt.

5. Halterung nach Anspruch 4, **dadurch gekennzeichnet, dass** die Befestigungselemente (5a, 5b) mittels einer die weiteren Bohrungen des Befestigungselements und die weiteren Bohrungen (13) der Justierschablone (11) durchdringenden Befestigungsschraube (6) an der raumbegrenzenden Struktur (4) anbringbar ist, wobei der Innendurchmesser der in der Justierschablone (11) vorgesehenen weiteren Bohrungen (13) größer ist als der Außendurchmesser des Schraubenkopfes der Befestigungsschraube (6).

6. Halterung nach einem der Ansprüche 1 bis 5, **dadurch gekennzeichnet, dass** die Justierschablone (11) streifenförmig ausgebildet und insbesondere durch einen Blechstreifen gebildet ist.

7. Halterung nach einem der Ansprüche 1 bis 6, **dadurch gekennzeichnet, dass** die Justierschablone (11) an beiden Enden zur Ausbildung von Griffbereichen (11 a) zum Herausnehmen der Justierschablone abgekantet ist.

8. Halterung nach einem der Ansprüche 1 bis 7, **dadurch gekennzeichnet, dass** die Justierschablone (11) farbig ausgebildet ist.

9. Halterung nach einem der Ansprüche 1 bis 8, **dadurch gekennzeichnet, dass** die Halteprofile (3a, 3b) als Metallprofile oder Metall-Hohlprofile ausgestaltet sind, insbesondere aus Stahl, Edelstahl oder Aluminium.

10. Halterung nach einem der Ansprüche 1 bis 9, **dadurch gekennzeichnet, dass** die Halteprofile (3a, 3b) einen rechteckigen Querschnitt besitzen.

11. Halterung nach einem der Ansprüche 1 bis 10, **dadurch gekennzeichnet, dass** die Halteprofile (3a, 3b) in Längsrichtung bogenförmig, kreissegmentartig, gewinkelt oder gerade ausgebildet sind.

12. Brandschutzverglasung (1) zur Vermeidung des Durchtritts von Feuer und Rauch im Brandfall von einem Raum in einen anderen mit einer Halterung (3) nach einem der Ansprüche 1 bis 11 und mit zumindest einer Brandschutzscheibe (2), die in der Halterung (3) nach Entfernung der herausnehmbaren Justierschablone (11) fixiert ist.

13. Brandschutzverglasung nach Anspruch 12, **dadurch gekennzeichnet, dass** die Brandschutzscheibe (2) eine intumeszierende Brandschutzscheibe ist.

14. Brandschutzverglasung nach Anspruch 12, **dadurch gekennzeichnet, dass** die Brandschutzscheibe (2) zwei mittels eines Randverbunds parallel voneinander beabstandete feuerfeste Glasscheiben aufweist und der vom Bandverbund eingeschlossene Raum zwischen den feuerfesten Glasscheiben mit einem Brandschutzgel gefüllt ist.

## Claims

1. A holder (3) for a fire protection pane (2), which comprises two retaining profiles (3a, 3b) spaced from each other in parallel and to be mounted on a space-limiting structure (4), between which retaining profiles the fire protection pane (2) can be inserted,
**characterized in that**
respectively at least two fastening elements (5a, 5b) are mounted and/or formed on the retaining profiles (3a, 3b) such that they are thermally separated from each other and a temperature transfer from the one retaining profile onto the other retaining profile is avoided, wherein the retaining profiles (3a, 3b) are connected by means of a removable adjustment template (11) preferably via fastening elements (5a, 5b) which correspond with each other in pairs and which serve for mounting,
wherein the fastening elements (5a, 5b) are formed by metal sheets and arranged in a mostly right-angled manner on the retaining profiles (3a, 3b) in the portion of the retaining profiles (3a, 3b) that faces the space-limiting structure (4), which fastening elements (5a, 5b) extend into the direction of the respectively opposite retaining profile (3a, 3b),
wherein the fastening elements (5a, 5b) furthermore respectively extend into the interspace formed by the two retaining profiles (3a, 3b) which extend in parallel to each other, wherein the dimensioning of the fastening elements (5a, 5b) is selected such that they respectively project beyond the middle of the distance between the retaining profiles (3a, 3b), and the fastening elements (5a, 5b) are fixed on the retaining profiles beneath the faces of the retaining profiles (3a, 3b) which face the space-limiting structure (4), wherein the fastening elements (5a) of the first retaining profile (3a) are screwed with this one and the fastening elements (5b) of the second retaining profile (3b) are welded or screwed with this one.

2. A holder according to claim 1, **characterized in that** the retaining profiles (3a, 3b) are designed as hollow profiles and that a threaded sleeve (7) is screwed into or welded onto the fastening element (5a, 5b) for forming the screwing between the fastening element (5a, 5b) and the retaining profile (3a, 3b), which threaded sleeve (7) at least partially passes through the retaining profile (3a, 3b), and a screw (8) is screwed into the side of the retaining profile averted from the fastening element (5a, 5b), by means of which screw (8) the retaining profile (3a, 3b) and the fastening element (5a, 5b) are joined together.

3. A holder according to one of the claims 1 to 2, **characterized in that** at least two bores are arranged in the adjustment template (11) and respectively at least one bore provided with an inner thread and arranged concentrically with respectively one of the bores of the adjustment template (11) is formed in the fastening elements (5a, 5b), wherein the adjustment template (11) is connected with the fastening elements (5a, 5b) respectively by means of connecting screws (12) passing through the bores which are concentric with respect to each other.

4. A holder according to claim 3, **characterized in that** at least two other bores (13) are provided in the adjustment template (11) and respectively at least one other bore which is arranged concentrically with respect to the other bores (13) of the adjustment template (11) is provided in the fastening elements (5a, 5b), wherein the inner diameter of the other bores (13) provided in the adjustment template (11) exceeds the one of the other bores of the fastening elements (5a, 5b).

5. A holder according to claim 4, **characterized in that** the fastening elements (5a, 5b) can be mounted on the space-limiting structure (4) by means of a fastening screw (6) passing through the other bores of the fastening element and the other bores (13) of the adjustment template (11), wherein the inner diameter of the other bores (13) provided in the adjustment template (11) is greater than the outer diameter of the screw head of the fastening screw (6).

6. A holder according to one of the claims 1 to 5, **characterized in that** the adjustment template (11) is strip-shaped and in particular formed by a metal strip.

7. A holder according to one of the claims 1 to 6, **characterized in that** the adjustment template (11) is chamfered at both ends for forming gripping areas (11 a) for removing the adjustment template.

8. A holder according to one of the claims 1 to 7, **characterized in that** the adjustment template (11) is coloured.

9. A holder according to one of the claims 1 to 8, **characterized in that** the retaining profiles (3a, 3b) are designed as metal profiles or metal hollow profiles, in particular made of steel, stainless steel or aluminum.

10. A holder according to one of the claims 1 to 9, **characterized in that** the retaining profiles (3a, 3b) comprise a rectangular cross section.

11. A holder according to one of the claims 1 to 10, **characterized in that** the retaining profiles (3a, 3b) are lengthwise arc-shaped, circle segment-shaped, angled or straight.

12. A fire protection glazing (1) for preventing fire and smoke from spreading from one room into another one in the event of fire, comprising a holder (3) according to one of the claims 1 to 11 and comprising at least one fire protection pane (2) which is fixed in the holder (3) after removal of the detachable adjustment template (11).

13. A fire protection glazing according to claim 12, **characterized in that** the fire protection pane (2) is an intumescent fire protection pane.

14. A fire protection glazing according to claim 12, **characterized in that** the fire protection pane (2) comprises two fireproof glass panes which are spaced from each other in parallel by means of an edging and the space between the fireproof glass panes which is enclosed by the edging is filled with a fire protection gel.

## Revendications

1. Dispositif de fixation (3) d'une vitre coupe-feu (2), qui comprend deux profilés de retenue (3a, 3b) espacés parallèlement l'un de l'autre et susceptibles d'être montés sur une structure limitant un espace (4), entre lesquels profilés de retenue peut être insérée la vitre coupe-feu (2),
**caractérisé en ce que**
respectivement au moins deux éléments de fixation (5a, 5b) sont montés et/ou formés sur les profilés de retenue (3a, 3b) de sorte qu'ils sont thermiquement séparés l'un de l'autre et un transfert de température de l'un profilé de retenue à l'autre profilé de retenue est évité, les profilés de retenue (3a, 3b) étant reliés par moyen d'un pochoir de réglage (11) amovible, de préférence via des éléments de fixation (5a, 5b), qui correspondent les uns aux autres par paire et servent au montage,
les éléments de fixation (5a, 5b) étant formés par des feuilles métalliques et étant disposés de manière largement orthogonale sur les profilés de retenue (3a, 3b) dans la zone de ceux-ci, laquelle fait face à la structure limitant un espace (4), lesquels éléments de fixation (5a, 5b) s'étendant dans la direction du profilé de retenue respectivement opposé (3a, 3b),
les éléments de fixation (5a, 5b) s'étendant en outre chacun dans l'interstice formé par les deux profilés de retenue (3a, 3b), qui s'étendant parallèlement l'un à l'autre, le dimensionnement des éléments de fixation (5a, 5b) étant sélectionné de sorte que ceux-ci font saillie au-delà du milieu de la distance entre les profilés de retenue (3a, 3b), et les éléments de fixation (5a, 5b) étant fixés sur les profilés de retenue (3a, 3b) au-dessous des faces de ceux-ci, lesquelles font face à la structure limitant un espace (4), les éléments de fixation (5a) du premier profilé de retenue (3a) étant vissés avec celui-ci et les éléments de fixation (5b) du deuxième profilé de retenue (3b) étant soudées ou vissés avec celui-ci.

2. Dispositif de fixation selon la revendication 1, **caractérisé en ce que** les profilés de retenue (3a, 3b) sont conçus comme des profilés creux et qu'une douille taraudée (7) est vissée dans ou soudée sur l'élément de fixation (5a, 5b) pour former le vissage entre l'élément de fixation (5a, 5b) et le profilé de retenue (3a, 3b), laquelle douille taraudée (7) traverse au moins partiellement le profilé de retenue (3a, 3b), et une vis (8) est vissée dans le côté du profilé de retenue, lequel est opposé à l'élément de fixation (5a, 5b), par moyen de laquelle vis (8) le profilé de retenue (3a, 3b) et l'élément de fixation (5a, 5b) sont retenus ensemble.

3. Dispositif de fixation selon l'une des revendications 1 à 2, **caractérisé en ce qu'**au moins deux trous de forage sont ménagés dans le pochoir de réglage (11) et respectivement au moins un trou de forage muni d'un filetage intérieur et disposé de manière concentrique par rapport à au moins un des trous de forage du pochoir de réglage (11) est formé dans les éléments de fixation (5a, 5b), le pochoir de réglage (11) étant relié aux éléments de fixation (5a, 5b) respectivement par moyen des vis de liaison (12) passant à travers les trous de forage concentriques l'un par rapport à l'autre.

4. Dispositif de fixation selon la revendication 3, **caractérisé en ce qu'**au moins deux autres trous de forage (13) sont prévus dans le pochoir de réglage (11) et respectivement un autre trou de forage disposé de manière concentrique par rapport aux autres trous de forage (13) du pochoir de réglage (11) est prévu dans les éléments de fixation (5a, 5b), le diamètre intérieur des autres trous de forage (13) ménagés dans le pochoir de réglage (11) excédant celui des autres trous de forage des éléments de fixation (5a, 5b).

5. Dispositif de fixation selon la revendication 4, **caractérisé en ce que** les éléments de fixation (5a, 5b) peuvent être montés sur la structure limitant un espace (4) par moyen d'une vis de fixation (6) passant à travers les autres trous de forage de l'élément de fixation et les autres trous de forage (13) du pochoir de réglage (11), le diamètre intérieur des autres trous de forage (13) prévus dans le pochoir de réglage (11) étant plus grand que le diamètre extérieur de la tête de vis de la vis de fixation (6).

6. Dispositif de fixation selon l'une des revendications 1 à 5, **caractérisé en ce que** le pochoir de réglage (11) est en forme de bande et notamment formé par une band métallique.

7. Dispositif de fixation selon l'une des revendications 1 à 6, **caractérisé en ce que** le pochoir de réglage (11) est chanfreiné aux deux extrémités pour former des zones de prise (11 a) pour sortir le pochoir de réglage.

8. Dispositif de fixation selon l'une des revendications 1 à 7, **caractérisé en ce que** le pochoir de réglage (11) est coloré.

9. Dispositif de fixation selon l'une des revendications 1 à 8, **caractérisé en ce que** les profilés de retenue (3a, 3b) sont conçus comme des profilés métalliques ou des profilés creux métalliques, notamment en acier, en acier inoxydable ou en aluminium.

10. Dispositif de fixation selon l'une des revendications 1 à 9, **caractérisé en ce que** les profilés de retenue (3a, 3b) comprennent une section transversale rectangulaire.

11. Dispositif de fixation selon l'une des revendications 1 à 10, **caractérisé en ce que** les profilés de retenue (3a, 3b) sont longitudinalement en forme d'arc, en forme d'arc de cercle, coudés ou droits.

12. Vitrage coupe-feu (1) pour empêcher le feu et la fumée de se propager d'une pièce à une autre en cas d'incendie, comprenant un dispositif de fixation (3) selon l'une des revendications 1 à 11 et comprenant au moins une vitre coupe-feu (2), qui est fixée dans le dispositif de fixation (3) après l'enlèvement du pochoir de réglage (11).

13. Vitrage coupe-feu selon la revendication 12, **caractérisé en ce que** la vitre coupe-feu (2) est une vitre coupe-feu intumescente.

14. Vitrage coupe-feu selon la revendication 12, **caractérisé en ce que** la vitre coupe-feu (2) comprend deux plaques de verre ignifuges parallèlement espacées l'une de l'autre par moyen d'un joint périphérique et l'espace entre les plaques de verre ignifuges, lequel est enfermé par le joint périphérique, est rempli avec un gel coupe-feu.
